(19) Europäisches Patentamt
European Patent Office
Office européen des brevets

(11) Numéro de publication: **0 122 168**
**A1**

(12) **DEMANDE DE BREVET EUROPEEN**

(21) Numéro de dépôt: **84400441.6**

(22) Date de dépôt: **06.03.84**

(51) Int. Cl.³: **G 02 F 1/13**, G 02 F 1/133

(30) Priorité: **18.03.83 FR 8304479**

(43) Date de publication de la demande: **17.10.84**
**Bulletin 84/42**

(84) Etats contractants désignés: **DE GB IT NL**

(71) Demandeur: **THOMSON-CSF, 173, Boulevard Haussmann, F-75379 Paris Cedex 08 (FR)**

(72) Inventeur: **Mourey, Bruno, THOMSON-CSF SCPI 173, bld Haussmann, F-75379 Paris Cedex 08 (FR)**
Inventeur: **Hareng, Michel, THOMSON-CSF SCPI 173, bld Haussmann, F-75379 Paris Cedex 08 (FR)**

(74) Mandataire: **Lepercque, Jean et al, THOMSON-CSF SCPI 173, Bld Haussmann, F-75379 Paris Cedex 08 (FR)**

(54) **Ecran de visualisation en couleurs à cristal liquide smectique.**

(57) L'invention se rapporte aux écrans de visualisation à cristal liquide smectique permettant d'afficher une image en couleurs.

L'invention a pour objet d'obtenir une image en couleurs à partir de couches filtrantes (51, 52, 53) déposées sur les électrodes d'un écran à affichage matriciel, la configuration des électrodes supportant ces couches étant telle qu'elle évite les phénomènes d'interlignage des couleurs.

L'invention s'applique notamment aux écrans de visualisation à lecture directe.

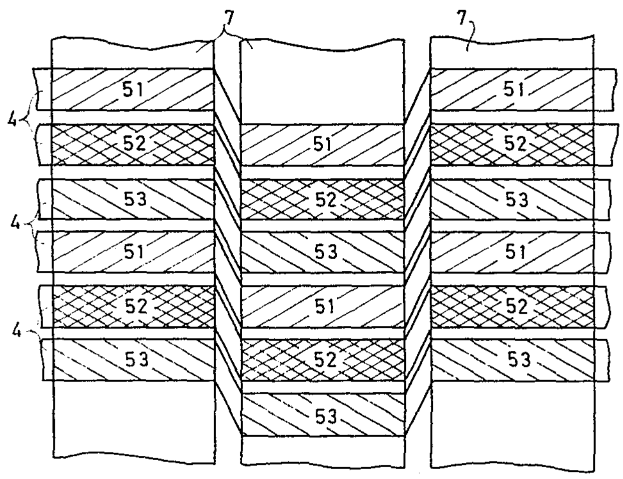


EP 0 122 168 A1

ACTORUM AG

# ECRAN DE VISUALISATION EN COULEURS A CRISTAL LIQUIDE SMECTIQUE

La présente invention se rapporte à un écran de visualisation à accès matriciel utilisant l'effet mixte thermique et électrique et affichant une image ou des informations en couleur.

Il est connu d'utiliser un effet mixte thermique et électrique avec des cristaux liquides smectiques pour réaliser des écrans de ce type. Ils peuvent être utilisés soit en projection soit en vision directe.

On peut par exemple employer trois dispositifs distincts correspondant chacun à une couleur primaire et dont on projette les images en superposition sur un écran afin de restituer l'image originelle. Il a l'inconvénient de l'encombrement et de la complexité.

Un autre moyen d'obtenir une image couleur consiste à insérer, sur le trajet optique entre une source d'éclairage et un écran, un filtre formé de bandes colorées parallèles et conjugué optiquement avec une cellule de visualisation. Ce système n'utilise qu'une seule cellule mais a aussi l'inconvénient de l'encombrement et d'avoir à disposer certains éléments à des distances bien définies. Il a fait l'objet d'une demande de brevet français de la Demanderesse portant le numéro national 79.23 599 et déposée le 21 Septembre 1979.

Il est connu d'autre part (brevet français de la Demanderesse déposé le 5 Mai 1977 sous le numéro national 77.13 738) d'obtenir une image en couleur à partir d'une cellule de visualisation du type comprenant une couche de matériau inscriptible par effet thermo-électrique, dans laquelle des miroirs diélectriques, alternativement rouge, vert et bleu, sont placés au-dessus des lignes chauffantes et parallèlement à celles-ci. L'un des inconvénients de ce dispositif réside dans la difficulté de réalisation de ces miroirs.

Une autre méthode pour obtenir des dispositifs de visualisation à une couleur consiste à utiliser des colorants dichroïques en solution dans un cristal liquide nématique. Par l'utilisation d'un champ électrique approprié, on peut incliner les molécules du cristal liquide ainsi que les molécules dichroïques et passer d'un état absorbant à un état non absorbant. On

transforme donc une variation d'orientation des molécules en variation d'absorption. Le point élémentaire est donc soit transparent soit coloré, de la couleur du colorant dichroïque dissous dans le cristal liquide. Le problème pratique des dispositifs à colorants dichroïques est de trouver une molécule de colorant stable qui possède un paramètre d'ordre angulaire suffisamment bon.

Afin de pallier ces inconvénients, l'invention propose de réaliser un écran plat trichrome, utilisant l'effet mixte thermique et électrique, par dépôt à l'intérieur de la cellule de visualisation, de couches filtrantes constituées d'un film de polymère contenant des colorants dissous. Ces couches filtrantes présentent l'avantage d'être beaucoup plus facilement réalisables que les miroirs diélectriques cités précédemment. L'invention a aussi pour objet de disposer les couches filtrantes de façon à ce qu'elles forment des triplets de couleur afin d'éviter l'interlignage de bandes colorées.

L'invention a donc pour objet un écran de visualisation à cristal liquide smectique du type à affichage matriciel comprenant un réseau d'électrodes chauffantes et un réseau d'électrodes vidéo encadrant une couche de cristal liquide smectique, ledit écran restituant une image en couleurs à partir d'un rayonnement polychromatique incident à l'écran, ladite image étant la résultante des points élémentaires d'affichage constitués par le croisement des électrodes chauffantes et des électrodes vidéo, ledit écran comprenant également des moyens de sélection d'au moins deux couleurs primaires dudit rayonnement, lesdits moyens de sélection étant constitués de dépôts filtrants placés aux points élémentaires d'affichage et supportés par les électrodes d'au moins l'un desdits réseaux, lesdits dépôts filtrants étant groupés par multiplets de couleurs primaires, caractérisé en ce que la configuration des électrodes et l'agencement des multiplets sont tels que les éléments filtrants d'un même alignement effectuent des filtrages différenciés afin d'éviter l'alignement des dépôts d'une même couleur.

L'invention sera mieux comprise et d'autres avantages apparaîtront au moyen de la description qui va suivre ainsi que par les figures annexées parmi lesquelles :

- la figure 1 est une vue partielle en coupe transversale d'une cellule à cristal liquide smectique selon l'invention,

- la figure 2 est une vue de face d'un écran montrant la disposition des différentes électrodes,

- la figure 3 montre un schéma électrique relatif à la commande d'un écran selon l'invention,

- la figure 4 est une vue de face d'un écran selon une variante de l'invention.

La figure 1 est une vue partielle en coupe transversale d'une cellule à cristal liquide smectique selon l'invention. Cette cellule peut servir directement en tant qu'écran ou l'image délivrée par la cellule peut être projetée sur un écran. Elle comprend deux lames 1 et 2 dont l'épaisseur peut être comprise entre 0,5 et 3 mm. Selon que la cellule sera utilisée en réflexion ou en transmission, le substrat 2 pourra être choisi opaque ou transparent. La lame 1 sera transparente, par exemple en verre. L'espace compris entre les lames 1 et 2, d'environ 12 micromètres d'épaisseur et défini par des cales d'épaisseur non représentées, est rempli d'une couche de cristal liquide 3 possèdant au moins une phase smectique. Ce sera par exemple un mélange de biphényles tel que :

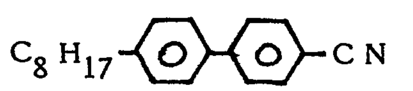

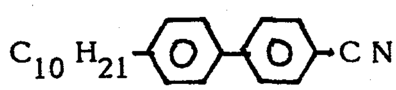

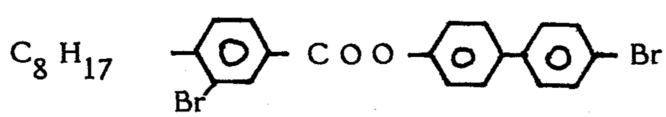

qui possède les transitions de phase suivantes :

$$K \xrightarrow{6°\,C} S_A \xrightarrow{53°\,C} N \xrightarrow{56°\,C} I$$

Les électrodes 4 permettent le chauffage du cristal liquide. On les choisit généralement métalliques et réfléchissantes, par exemple en aluminium. Pour une cellule travaillant en transmission, elles pourront être réalisées en un matériau conducteur transparent tel que l'oxyde mixte

d'indium et d'étain (électrodes ITO). Chaque électrode 4 est recouverte d'une série de plots 5 constitués d'un mince dépôt de polymère dans laquelle ont été dissous des colorants et qui formeront les couches filtrantes. La face interne du substrat 2 supportant les électrodes 4 et les plots 5 peut être recouverte d'une mince couche 6 de polyimide. La couche 6 a pour but de protéger les plots en polymère de l'action éventuellement corrosive du cristal liquide. Une mince couche de silane peut être déposée par dessus.

La lame 1 supporte une série d'électrodes 7 transparentes, par exemple en oxyde mixte d'indium et d'étain, placées de façon à croiser les électrodes 4. Elle reçoit également une mince couche 8 de silane servant de surfactant et qui permet d'orienter les molécules de cristal liquide de façon homéotrope.

Il est avantageux de disposer les électrodes 4 et 7 de façon à ce qu'elles forment un système matriciel. Les électrodes 4 forment un premier réseau de bandes parallèles. Elles constitueront par exemple les connexions de lignes du système matriciel. Les électrodes 7 forment un second réseau de bandes parallèles disposées de façon sensiblement orthogonale aux électrodes 4. Elles constitueront les connexions de colonnes du système matriciel. Le croisement des électrodes des deux réseaux définit des points élémentaires d'affichage.

Pour des questions pratiques de réalisation, à chaque électrode chauffante 4 correspond une série de plots 5 d'une couleur déterminée. La restitution d'une image en couleurs à partir des couleurs primaires : rouge, vert et bleu est réalisée par une alternance des électrodes supportant des plots d'une couleur déterminée. Chaque élément couleur constituant l'image étant la résultante d'un triplet de couleurs primaires, pour obtenir la même définition qu'avec un écran monochrome, il faut disposer de trois fois plus d'électrodes de chauffage.

Dans les écrans de visualisation à accès matriciel qui fournissent des images non colorées, les connexions de lignes sont formées de bandes parallèles rectilignes. Il en va de même pour les connexions de colonnes. Cette disposition est satisfaisante dans le cas des écrans fonctionnant en noir et blanc. Dans le cas d'un écran couleurs, une telle disposition conduirait à un interlignage des bandes colorées qui est assez désagréable pour la vue. Pour remédier à cet inconvénient, l'invention propose de donner

aux électrodes qui supportent les plots colorés, une forme particulière qui permet au triplet élémentaire de couleurs d'être réparti alternativement au-dessus et au-dessous d'une droite imaginaire.

La figure 2 est une vue de face d'un écran qui montre la disposition des différentes électrodes. La vue a été représentée côté électrodes colonnes qui sont transparentes dans le cas décrit plus haut. Par souci de simplification, elle ne montre que les électrodes lignes et colonnes ainsi que les plots colorés. Sous les connexions de colonnes 7 formées de bandes parallèles transparentes, on remarque les connexions de lignes 4. Celles-ci sont formées d'une suite de tronçons placés suivant une ligne brisée. Les tronçons situés sous les électrodes de colonnes et en vis-à-vis de celles-ci leur sont orthogonaux. Ils sont reliés entre eux par des tronçons de lignes placés obliquement par rapport au réseau matriciel. Comme le montre la figure 2, l'agencement des différents tronçons est tel qu'en suivant une ligne AA' perpendiculaire aux électrodes de colonnes et situés dans le même plan, on passe successivement d'une électrode ligne à l'électrode ligne qui la précède numériquement parlant pour revenir à la première électrode citée. Sur chacun des tronçons orthogonaux aux électrodes de colonnes, sont placés des plots colorés, à chaque électrode ligne 4 étant affectée une couleur et chacune se trouvant entre des électrodes auxquelles sont affectées des couleurs complémentaires. On obtient ainsi une alternance des couleurs de base. Par exemple, une première électrode supporte des plots rouges 51, la suivante des plots verts 52 et celle qui suit des plots bleus 53. Le long d'une même électrode de colonne, on trouve donc une suite de triplets colorés formés par les plots 51, 52 et 53. Les électrodes lignes étant imbriquées les unes dans les autres, l'interlignage des bandes colorées est ainsi évité. En examinant la figure 2, on constate que d'une colonne à l'autre, les triplets sont décalés d'une couleur. Il est bien sûr possible de les décaler davantage mais il faut tenir compte des conséquences de ce décalage sur les tronçons obliques de raccordement. En effet, plus le décalage est grand et plus la section des tronçons de raccordement diminue. Si les électrodes lignes servent également de bandes chauffantes et les électrodes de colonnes d'électrodes vidéo, on comprend qu'il faut garder une certaine uniformité de section pour les électrodes chauffantes puisque le courant de chauffage qui

les traverse est de l'ordre de 1A. Il serait possible de garder une section identique tout le long des électrodes lignes en jouant sur l'épaisseur des dépôts métalliques mais cela complique passablement la fabrication des écrans. Une disposition telle que celle de la figure 2 représente un excellent compromis. On constate également que chaque électrode ligne 4 a une largeur environ trois fois plus faible que celle des électrodes de colonnes afin de pouvoir disposer des trois couleurs de base.

Le principe de fonctionnement est le suivant. On utilise l'effet classique thermique et électrique dans les écrans à cristal liquide smectique, qui permet d'obtenir deux états stables, l'un diffusant et l'autre transparent. Dans un écran monochrome, grâce à la réflexion spéculaire se produisant sur les électrodes chauffantes métalliques, un point transparent apparaît noir et un point diffusant apparaît blanc. En associant à chaque point de l'écran un filtre coloré, le point transparent apparaîtra également noir, tandis qu'un point diffusant apparaîtra de la couleur du filtre correspondant. Si l'on veut obtenir des nuances de couleurs, il suffit de jouer sur les valeurs des tensions vidéo pour les obtenir.

Pour obtenir un afficheur coloré sur fond noir, il faudra travailler en inversion de contraste, c'est-à-dire appliquer une tension vidéo pour obtenir un point noir et n'appliquer aucune tension pour obtenir un point coloré.

La partie de la description qui va suivre portera sur la réalisation pratique d'un écran de visualisation tel que celui qui vient d'être décrit. Par rapport aux écrans de visualisation de l'art connu, les différences de réalisation portent sur les points suivants : les électrodes chauffantes et les triplets colorés. Dans le cas d'électrodes chauffantes métalliques, celles-ci peuvent être obtenues par gravure en couche mince suivant la forme représentée figure 2. La réalisation des triplets colorés peut se faire de la façon suivante :

- dépôt à la tournette d'une couche mince (d'au plus deux micromètres d'épaisseur) d'un polymère coloré photosensible sur la surface de la lame 2 supportant les électrodes 4. Le polymère peut être un polyimide ou de la gélatine et le colorant, correspondant à l'une des couleurs de base, doit avoir comme propriétés de bien se dissoudre dans le polymère employé et de supporter le recuit.

- insolation à travers un masque des plots à conserver.
- attaque chimique des parties non insolées.
- recuit des plots obtenus pour augmenter la résistance de ceux-ci.
- dépôt et gravure des plots correspondant aux autres couleurs par le même procédé que précédemment.

Toutes les autres opérations telles que les dépôts de couches d'ancrage, la réalisation des électrodes de colonne sont des opérations bien connues des fabricants d'écrans de visualisation.

Chaque triplet de couleurs permettra, suivant le procédé additif, d'obtenir huit teintes différentes selon l'état diffusant ou non diffusant des parties de la couche de cristal liquide situées en face des plots du triplet : vert, bleu, rouge, noir, blanc (bleu + vert + rouge), cyan (bleu + vert), magenta (bleu + rouge) et jaune (vert + rouge).

Le dispositif de visualisation selon l'invention se prête très bien à la technique du multiplexage. Quelques circuits de commande doivent bien sûr être adaptés en fonction des modifications apportées à l'écran par rapport à un écran délivrant une image en noir et blanc. Ces modifications concernent surtout l'adressage ligne dans le cas décrit plus haut. La figure 3 montre un exemple d'adaptations à effectuer dans l'électronique de commande de l'adressage ligne. Elle reproduit le système matriciel d'électrodes représenté à la figure 2 avec les mêmes références. La figure 3 comprend également les éléments 10 et 11 qui font partie du circuit de commande lignes. L'élément 10 comprend la commande des lignes regroupées par triplets de couleurs. Cette commande peut s'effectuer par un transistor qui est représenté fonctionnellement par un interrupteur : 12i pour le groupe de lignes i, 12j pour le groupe suivant. L'élément 11 comprend la commande du choix des couleurs. La sélection des couleurs peut s'effectuer par la mise à la masse d'une électrode chauffante par l'intermédiaire de transistors représentés fonctionnellement par les interrupteurs $13_R$, $13_V$ ou $13_B$. Les indices R, V et B correspondent aux couleurs rouge, verte et bleue. L'excitation d'une ligne se fera de la façon suivante. Par exemple, pour la ligne rouge correspondant au groupe de lignes i, les interrupteurs 12i et $13_R$ seront fermés et les interrupteurs $13_V$ et $13_B$ seront ouverts. De cette façon, une tension de commande appliquée entre le groupe de lignes i et la

masse provoquera le passage d'un courant de chauffage dans l'électrode correspondant à la couleur rouge du groupe de lignes i. Pour empêcher l'apparition de tensions parasites sur les électrodes lignes qui ne sont pas adressées, il est nécessaire d'introduire des éléments non linéaires en série avec les électrodes chauffantes. Sur la figure 3, ces éléments sont des diodes 14 qui peuvent être placées directement sur l'écran. La sélection d'une ligne colorée se fait donc par sélection d'un triplet de lignes et d'une couleur. Cette façon de procéder permet de disposer pratiquement du même nombre de systèmes de commande de ligne que pour un écran monochrome.

La géométrie particulière donnée aux électrodes lignes dans l'exemple décrit ci-dessus n'est pas limitative. Les plots colorés peuvent être placés soit du côté lignes, soit du côté colonnes, ou encore des deux côtés. Le polymère utilisé pour réaliser ces plots peut être du type photorésist ou non. Dans ce dernier cas, la gravure des plots colorés nécessite le dépôt d'une résine photosensible pour photogravure classique du polymère par la technique dite du "lift off" ou par attaque directe.

La figure 4 est une vue de face d'un écran selon une variante de l'invention. Comme dans les figures 2 et 3, elle ne montre que les parties essentielles à la compréhension de l'invention. Cette réalisation montre une autre disposition possible des triplets de couleurs. Cette fois, ce sont les électrodes de colonnes ou électrodes vidéo qui ont été choisies pour délimiter les points élémentaires d'affichage. Les électrodes de lignes 20 ont la forme de bandes rectilignes et parallèles. Les électrodes de colonnes 21 sont formées de petites languettes placées en quinconce et reliées entre elles par de minces rubans conducteurs 22. Le nombre de colonnes est donc trois fois plus grand que pour un écran monochrome de même format. Si les électrodes colonnes ne sont pas traversées par un courant de chauffage mais servent à appliquer la tension vidéo, la différence de section entre les languettes et les bandes 22 n'a pas d'inconvénient particulier. Les languettes peuvent supporter les plots colorés. Par exemple, un triplet de couleur sera réalisé par les languettes 211, 212 et 213 auxquelles correspondent respectivement les couleurs verte, bleue et rouge. Un bon recouvrement de l'écran est assuré avec des languettes de forme sensiblement carrée et dont les côtés ont une dimensions à peu près égale à une demi-largeur d'électrode

ligne. En plaçant alternativement les plots colorés de part et d'autre de l'axe de symétrie BB' d'une électrode ligne, on arrive ainsi à éviter le phénomène d'interlignage.

On peut également utiliser l'effet produit par un colorant dichroïque, par exemple noir, dissous dans le cristal liquide smectique. Dans ce cas, le miroir réfléchissant doit être remplacé par un fond diffusant obtenu, par exemple, par évaporation d'aluminium sur un substrat chaud. En présence de colorant et sur fond diffusant, un point diffusant sera absorbant et apparaîtra noir. Un point transparent sera non absorbant et apparaîtra de la couleur du plot coloré placé sur la bande diffusante. Dans cette configuration le dispositif d'affichage travaillera en contraste normal.

Les dispositifs n'utilisant pas de colorant dichroïque peuvent être utilisés en projection.

REVENDICATIONS

1. Ecran de visualisation à cristal liquide smectique du type à affichage matriciel comprenant un réseau d'électrodes chauffantes (4) et un réseau d'électrodes vidéo (7) encadrant une couche de cristal liquide smectique (3), ledit écran restituant une image en couleurs à partir d'un rayonnement polychromatique incident à l'écran, ladite image étant la résultante des points élémentaires d'affichage constitués par le croisement des électrodes chauffantes et des électrodes vidéo, ledit écran comprenant également des moyens de sélection d'au moins deux couleurs primaires dudit rayonnement, lesdits moyens de sélection étant constitués de dépôts filtrants placés aux points élémentaires d'affichage et supportés par les électrodes d'au moins l'un desdits réseaux, lesdits dépôts filtrants étant groupés par multiplets de couleurs primaires, caractérisé en ce que la configuration des électrodes et l'agencement des multiplets sont tels que les éléments filtrants d'un même alignement effectuent des filtrages différenciés afin d'éviter l'alignement des dépôts d'une même couleur.

2. Ecran de visualisation selon la revendication 1, caractérisé en ce que les couleurs primaires sont le bleu, le rouge et le vert.

3. Ecran de visualisation selon l'une des revendications 1 ou 2, caractérisé en ce que les électrodes chauffantes (4) ont une configuration en forme de lignes brisées comportant des parties en vis-à-vis des électrodes vidéo, lesdites parties supportant les dépôts filtrants (51, 52, 53), chaque électrode chauffante supportant des dépôts d'une même couleur, chaque dépôt filtrant étant d'une couleur différente de celle des dépôts qui l'encadrent.

4. Ecran de visualisation selon l'une des revendications 1 ou 2, caractérisé en ce que les électrodes vidéo (21) sont constituées d'un chapelet de languettes reliées par de minces rubans conducteurs (22), lesdites languettes supportant chacune un dépôt filtrant (211, 212, 213), chaque électrode vidéo supportant des dépôts d'une même couleur, chaque dépôt filtrant étant d'une couleur différente de celle des dépôts qui l'encadrent.

5. Ecran de visualisation selon l'une quelconque des revendications 1 à 4, caractérisé en ce que ladite couche de cristal liquide comprend en solution un colorant dichroïque.

FIG.1

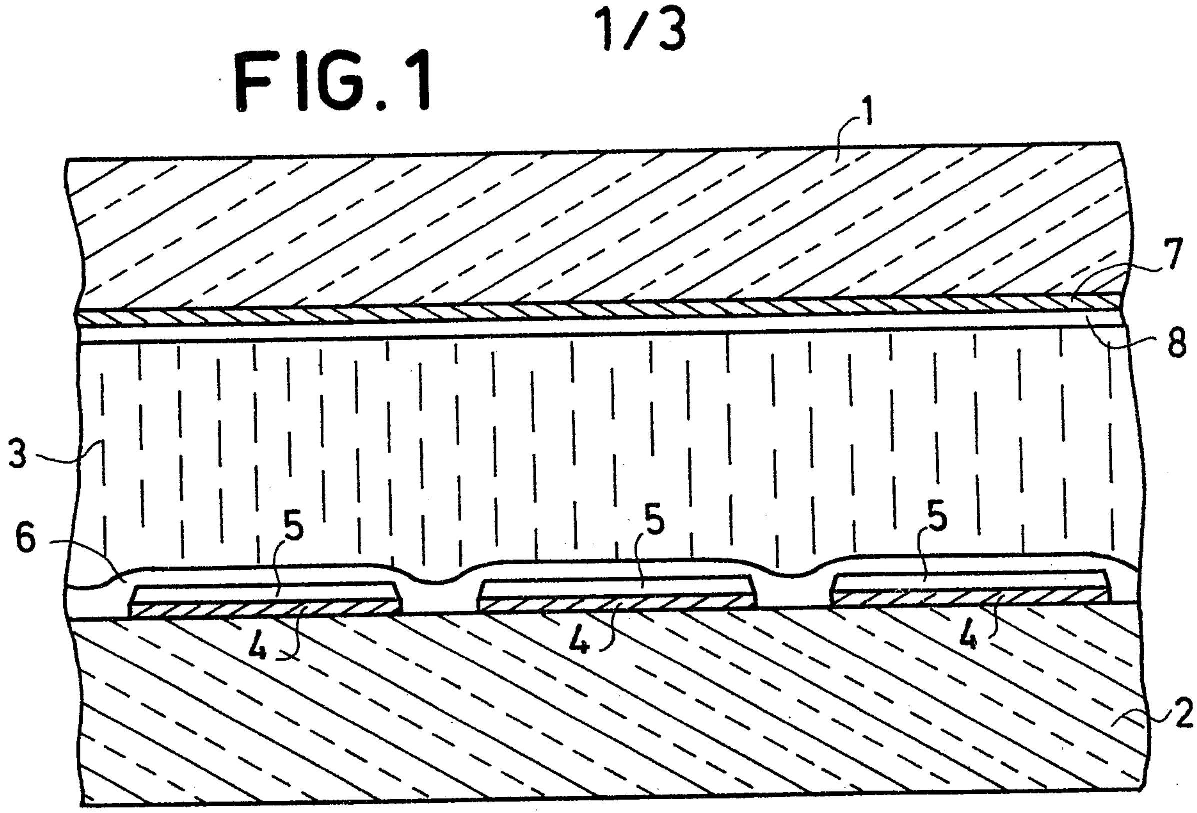
1
7
8
3
6
5
5
5
4
4
4
2

FIG.2

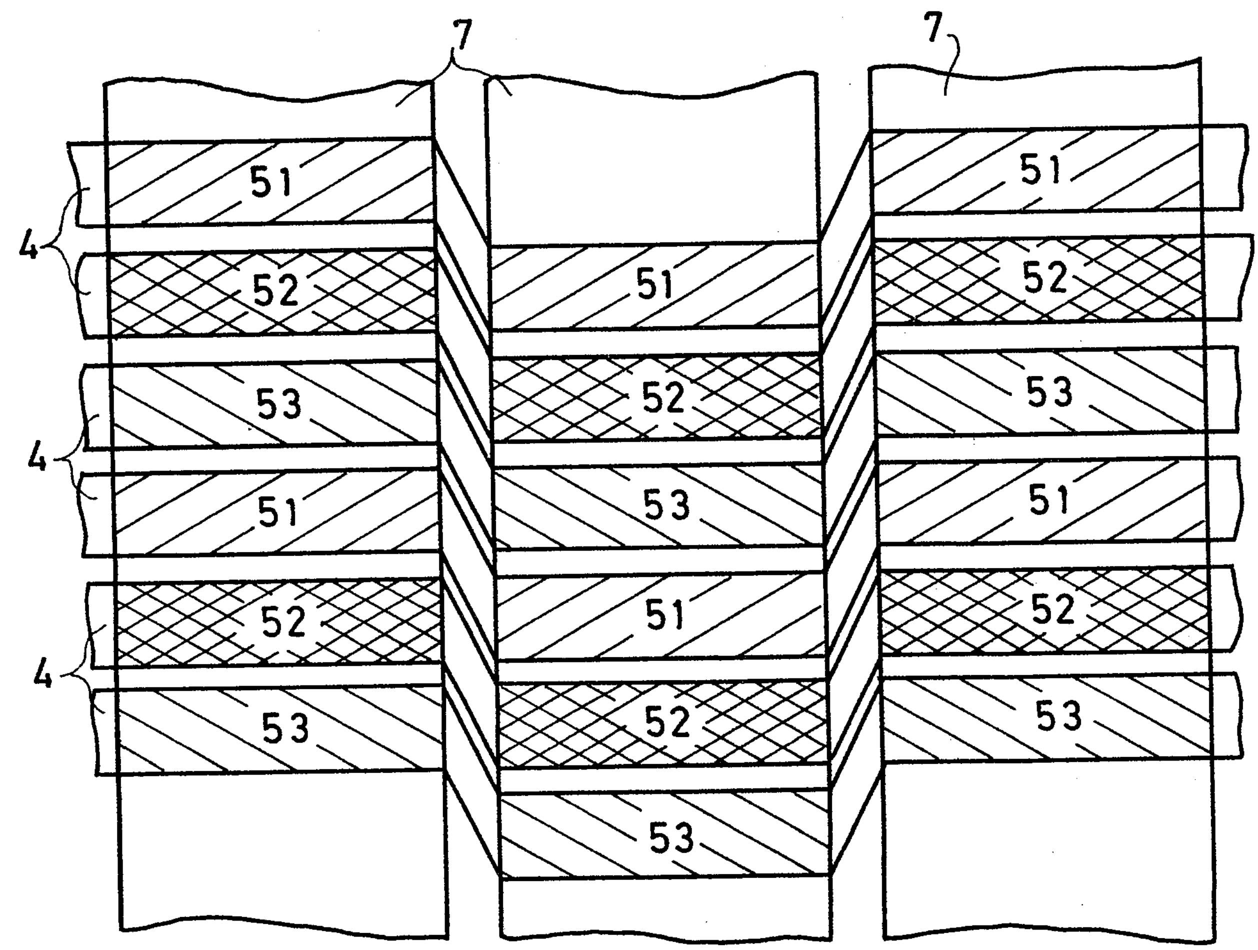
7
7
4
51
52
53
51
52
53
4
4
51
52
53
51
52
53
51
52
53
51
52
53

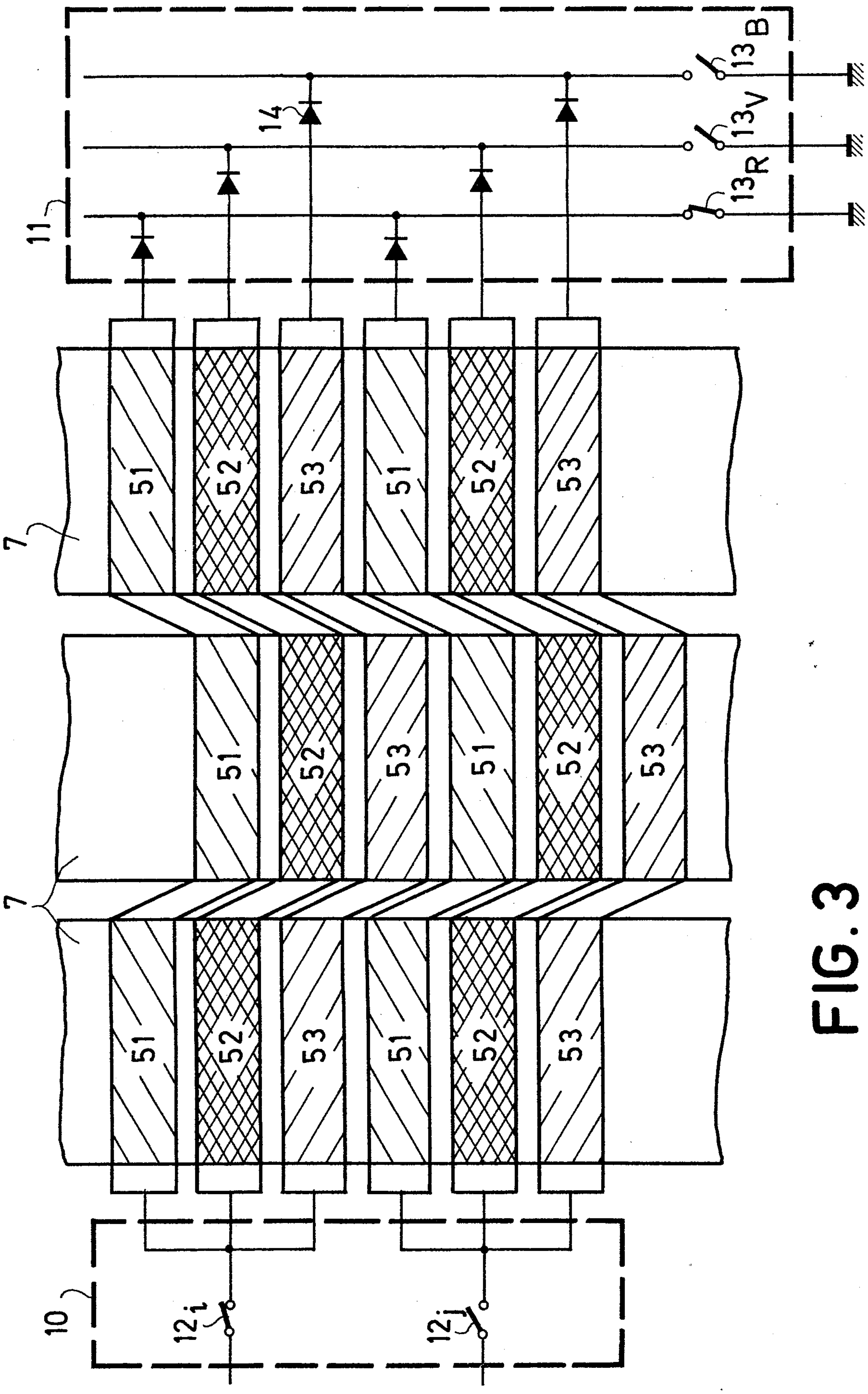


FIG. 3

FIG. 4

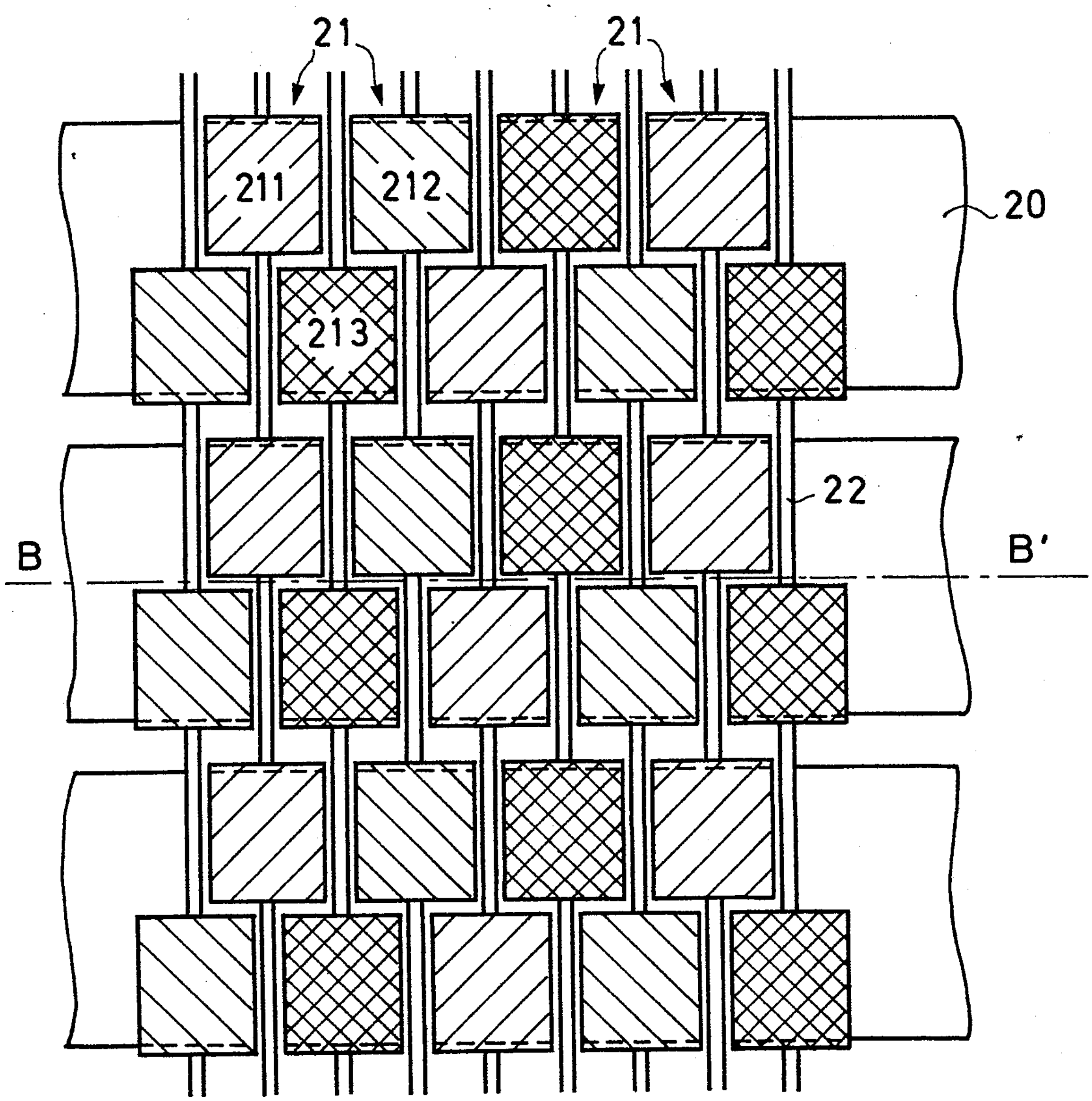

0122168

Office européen des brevets

# RAPPORT DE RECHERCHE EUROPEENNE

Numéro de la demande

EP 84 40 0441

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| D,Y | FR-A-2 389 955 (THOMSON-CSF) * Revendications 1-4,7-9,15-16; figures 1,2,6 * | 1,2,4 | G 02 F 1/13<br>G 02 F 1/133 |
| A | | 3 | |
| Y | GB-A-1 490 110 (MATSUSHITA) * Page 2, lignes 6-69; figure 3 * | 1,2,4 | |
| Y | GB-A-2 050 033 (SHARP) * Revendication 1; figures 3-5 * | 1,4 | |
| A | FR-A-2 310 050 (HUGHES AIRCRAFT) * Page 6, ligne 8 - page 7, ligne 10; figures 3,4A * | 1-2 | **DOMAINES TECHNIQUES RECHERCHES (Int. Cl. ³)** |
| A | 1982 SID INTERNATIONAL SYMPSOIUM, DIGEST OF TECHNICAL PAPERS, 1ère édition, mai 1982, pages 238-239, Lewis Winner Publ., Coral Gables, Florida, US; S. LU et al.: "Thermally-addressed pleochroic dye switching liquid crystal display" * En entier * | 5 | G 02 F<br>H 04 N |
| A | FR-A-2 083 868 (L.B. SHEPPARD et al.) | | |

--- -/-

Le présent rapport de recherche a été établi pour toutes les revendications

| Lieu de la recherche | Date d'achèvement de la recherche | Examinateur |
|---|---|---|
| LA HAYE | 26-06-1984 | BORMS F. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

0122168

Office européen des brevets

# RAPPORT DE RECHERCHE EUROPEENNE

Numero de la demande

EP 84 40 0441

Page 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| A | FR-A-2 451 082 (HITACHI)<br><br>----- | | |
| | | | DOMAINES TECHNIQUES RECHERCHES (Int. Cl. 3) |

Le présent rapport de recherche a été établi pour toutes les revendications

| Lieu de la recherche | Date d'achèvement de la recherche | Examinateur |
|---|---|---|
| LA HAYE | 26-06-1984 | BORMS F. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant